# EUROPÄISCHE PATENTANMELDUNG

(11) **EP 1 640 098 A2**
(43) Veröffentlichungstag der Anmeldung: **29.03.2006**
(21) Anmeldenummer: 05106021.8
(22) Anmeldetag: 01.07.2005
(51) Int. Cl.: B23H 3/00, B23H 9/00

(54) **Verfahren zur Bearbeitung von hochdruckfesten Dichtflächen an zwei metallischen Körpern**

(30) Priorität: 02.07.2004 DE 102004032201
(71) Anmelder: SIEMENS AKTIENGESELLSCHAFT, 80333 München (DE)
(72) Erfinder: Lewentz, Günter, 93093, Donaustauf (DE); Neumaier, Martin, 93059, Regensburg (DE); Venus, Rainer, 93138, Lappersdorf (DE)

(57) **Zusammenfassung**

Bei der Bearbeitung von hochdruckfesten Dichtflächen (2), wie sie beispielsweise bei einem Kraftstoffinjektor (10) eines Hochdruckeinspritzsystems zur Abdichtung gegen austretenden Kraftstoff benötigt werden, besteht das Problem, dass die ausgebildeten Dichtflächen (2) mit einer sehr hohen Präzision und Winkeltreue hergestellt werden müssen, da in dem Kraftstoffinjektor der Kraftstoffdruck bis zu 2000 bar betragen kann. Insbesondere zurückgesetzte Dichtflächen (2) lassen sich mit den bekannten Verfahren wie Fräsen, Schleifen oder Polieren nur mit einem sehr hohen Fertigungs- und Handlingsaufwand herstellen. Erfindungsgemäß wird daher vorgeschlagen, die Dichtflächen (2) mit einem elektrochemischen Materialabtragungsverfahren (ECM-Verfahren) auszubilden. Das ECM-Verfahren hat dabei den Vorteil, dass mit ihm auch dreidimensional Strukturen herstellbar sind. Des weiteren können in vorteilhafter Weise durch einfaches Vertauschen der Prozessparameter mehrer Arbeitsschritte ohne Umrüstzeiten durchgeführt werden, insbesondere kann eine Flächenvertiefung und das Polieren der erhabenen Dichtfläche (2) sehr vereinfacht werden.

## Beschreibung

Die Erfindung betrifft ein Verfahren zur Bearbeitung einer Dichtfläche an einem metallischen Körper. Eine solche Dichtfläche wird beispielsweise bei einem Kraftstoffinjektor benötigt, der aus mehreren Baugruppen, beispielsweise einem Injektorgehäuse und einem Düsenkörper zusammengesetzt ist. Die Baugruppen werden durch eine als Überwurfmutter ausgebildeten Düsenspannmutter zusammengepresst. Zwischen den beiden Baugruppen sind eine oder mehrere Dichtflächen angeordnet, die passgenau und mit hohem Aufwand gefertigt sind. Durch exaktes Aneinanderfügen der betroffenen Dichtflächen und Festziehen der Düsenspannmutter entsteht durch den Flächendruck eine hochdichte und kraftstofffeste Abdichtung, die bei allen Betriebsbedingungen ein Austreten des im Innern des Kraftstoffinjektors befindlichen Kraftstoffs verhindern soll.

Bisher wurden Dichtflächen an den betroffenen Körpern mit sehr großem Aufwand durch bekannte mechanische Bearbeitungsverfahren wie Fräsen, Schleifen, Superfinishen, Läppen, Honen, Prägen hergestellt. Dazu ist ein sehr großer Handlingsaufwand erforderlich. Insbesondere ist eine erhabene Dichtfläche auf diese Weise nur sehr schwierig herzustellen. Sind dagegen die Dichtflächen nicht exakt ausgerichtet und gefertigt, können im Kraftstoffinjektor sehr leicht mechanische Spannungen auftreten, die eine einwandfreie Funktion des Kraftstoffinjektors gefährden können. Insbesondere bei Kraftstoffinjektoren, die einen piezoelektrischen Aktor mit einer minimalen Längenänderung als Antrieb verwenden, können leicht Störungen auftreten, da die Längenänderungen des Aktors nur im µm-Bereich liegen und die vorgegebenen Toleranzen für die im Aktor beweglichen Teile äußerst gering sind.

Neben den genannten mechanischen Verfahren zur Bearbeitung von metallischen Oberflächen sind des weiteren thermische Verfahren beispielsweise mittels eines Lasers, eines Elektronenstrahls oder dergleichen bekannt.

Aus der WO 00/60233 ist des weiteren ein Kraftstoffeinspritzventil gekannt, bei dem die Dichtflächen eines Kraftstoffeinspritzventils insbesondere durch Laser- oder Elektronenstrahl-Materialabtragen erzeugt werden. Bei einer Ausführungsform werden dazu zwei sich berührende Stirnflächen zweier jeweils aufeinander liegender Injektormodule mit einer Teilfläche versehen. An der Teilfläche wird das Material von einer der beiden Stirnflächen abgetragen, so dass eine Vertiefung entsteht. Die Dichtfläche wird dann durch die verbliebene erhabene Kontaktfläche mit der zweiten Stirnfläche gebildet. Auf diese Weise wird für die verbliebene verkleinerte Kontaktfläche eine große Flächenpressung erzeugt, die eine sichere Abdichtung bewirkt.

Ebenfalls bekannt ist ein ECM-Verfahren (Electro-Chemical Mashining), bei dem in einem elektrischen Gleichspannungsfeld mit Hilfe eines Elektrolyten das Material abgetragen werden kann. Dieses Verfahren wird vornehmlich im Werkzeugbau und Armaturenbau, Gesenk- und Druckgussformbau zum Materialabtrag oder zur Bearbeitung von Oberflächen, beispielsweise zum Polieren von erodierten Oberflächen eingesetzt. Des weiteren ist bekannt, dieses Verfahren beispielsweise dazu zu verwenden, kleine Löcher oder Schlitze in dünnwandige Bleche einzubringen. Insbesondere können mit dem ECM-Verfahren auch Vertiefungen hergestellt werden.

Der Erfindung liegt die Aufgabe zu Grunde, die Herstellung einer Dichtfläche, insbesondere an einer Baugruppe eines Kraftstoffinjektors zu vereinfachen und die Zuverlässigkeit der Abdichtung zu verbessern. Diese Aufgabe wird mit den Merkmalen der nebengeordneten Ansprüche 1 und 10 gelöst.

Bei dem erfindungsgemäßen Verfahren mit den kennzeichnenden Merkmalen des Anspruchs 1 beziehungsweise dem Kraftstoffinjektor des Anspruchs 10 ergibt sich der Vorteil, dass die Bearbeitung einer Dichtfläche, insbesondere an einer Baugruppe eines Kraftstoffinjektors mit dem ECM-Prozess erheblich vereinfacht und damit schneller durchgeführt werden kann. Mit dem ECM-Prozess kann bei entsprechender Führung der Prozessschritte gleichzeitig eine Flächenvertiefung (Senken) eingebracht und nach Umschalten der Prozessparameter eine erhaben ausgebildete Dichtfläche poliert werden. Als besonders vorteilhaft wird dabei angesehen, dass für die Dichtfläche ohne großen Aufwand beliebige Konturen erzeugt werden können. Des weiteren lassen sich diese Arbeitsschritte an bereits wärmebehandelten Teilen der Baugruppe ausführen, ohne die Materialeigenschaften zu beeinflussen. Durch den ECM-Prozess treten keine thermischen oder mechanischen Spannungen oder Sekundärgrate auf. Eine weitere Nachbehandlung der Dichtflächen ist daher nicht erforderlich. Insgesamt ergeben sich somit für die Herstellung der Dichtfläche erhebliche Zeit- und Kostenvorteile.

Durch die in den abhängigen Ansprüchen aufgeführten Maßnahmen sind vorteilhafte Weiterbilden und Verbesserungen des in den nebengeordneten Ansprüchen 1 und 10 angegebenen Verfahrens beziehungsweise dem Kraftstoffinjektor gegeben. Eine erhabene Dichtfläche lässt sich leicht durch einfachen Materialabtrag an benachbarten Teilflächen herstellen. Zur Herstellung einer erhabenen Dichtfläche wird nur eine geringe Höhendifferenz benötigt, die im µm-Bereich liegt, so dass diese geringe Höhendifferenz mit dem ECM-Prozess in einer relativ kurzen Zeitspanne erzeugt werden kann.

Alternativ ist vorgesehen, die Dichtfläche als zurückgesetzte Fläche beziehungsweise als Senke vertieft auszubilden. Die Senke wird dabei als Negativform ausgebildet, die dann mit einer entsprechend geformten erhabenen Dichtfläche einer zweiten Baugruppe zusammengefügt werden kann.

Als besonders vorteilhaft wird angesehen, dass die Dichtfläche nahezu beliebig sphärisch geformt sein kann. Sie kann beispielsweise eben, konkav oder konvex ausgebildet werden. In Abhängigkeit von der Ausbildungsform kann die Dichtfläche auch jede andere dreidimensionale Kontur annehmen. Erreicht werden diese Formgebungen durch eine entsprechende maschinelle Führung der Kathode. Insbesondere durch Verändern des Anstandes der Kathode zur Oberfläche des Werkstücks, das die Anode bildet, können die gewünschten sphärischen Formen hergestellt werden.

Um eine besonders ebene Dichtfläche zu erhalten, ist vorgesehen, die Dichtfläche mit dem ECM-Prozess zu polieren. Beim Polieren wird ein weniger schneller Materialabtrag benötigt. Dieses kann am einfachsten mit geänderten Prozessparametern, beispielsweise durch eine Reduzierung des Arbeitsstromes, Änderung es Abstandes zum Werkstück oder Änderung der Elektrolytspülung erreicht werden.

Zum Materialabtrag wird für den ECM-Prozess eine wässrige Elektrolytlösung, beispielsweise NaCl verwendet. Mit Hilfe der elektrischen Gleichspannung lösen sich die Metall-Ionen von der als Anode wirkenden Fläche der Baugruppe und werden dann mit dem Elektrolyt ausgespült.

Besonders vorteilhaft erscheint die Lösung, den Elektrolyt direkt auf die Fläche aufzusprühen, die abgetragen werden soll. Dadurch bildet sich das elektrische Feld im Elektrolyt überwiegend nur an den Abtragungsflächen aus. Auf diese Weise lassen sich relativ scharfkantige und gradfreie Strukturen erstellen, die darüber hinaus besonders gut reproduzierbar sind.

Um insbesondere ebene Flächenabschnitte mit einer sehr hohen Formgenauigkeit zu erhalten, ist vorgesehen, das Werkstück (Baugruppe) oder das Werkzeug (Kathode) während der Bearbeitung zu bewegen oder zu drehen.

Zur gezielten Steuerung der Abtragungsrate oder der Oberflächenbehandlung können die einzelnen Prozessparameter entsprechend angepasst werden. Insbesondere lässt sich der Materialabtrag durch die Höhe des Arbeitsstromes, die Einwirkdauer, die aufzuspritzende Elektrolytmenge, den Elektrodenabstand zum Werkstück usw. beeinflussen. Auf diese Weise kann leicht sowohl der Materialabtrag wie auch die Güte und Rauhigkeit der Oberfläche gesteuert werden.

Ein Ausführungsbeispiel der Erfindung ist in der Zeichnung dargestellt und wird in der nachfolgenden Beschreibung näher erläutert.
Figur 1 zeigt eine Baugruppe eines Kraftstoffinjektors, die als Zwischenplatte ausgebildet ist, bei der eine Dichtfläche nach dem erfindungsgemäßen Verfahren hergestellt ist,
Figur 2 zeigt einen Querschnitt durch die Baugruppe,
Figuren 3a,b,c zeigen in schematischer Darstellung die Arbeitsweise des ECM-Prozesses,
Figur 4a zeigt ausschnittsweise eine Oberflächenstruktur,
Figur 4b zeigt das schematische Vorgehen beim Materialabtrag mit dem ECM-Prozess und
Figur 5 zeigt einen Längsschnitt durch einen Kraftstoffinjektor.

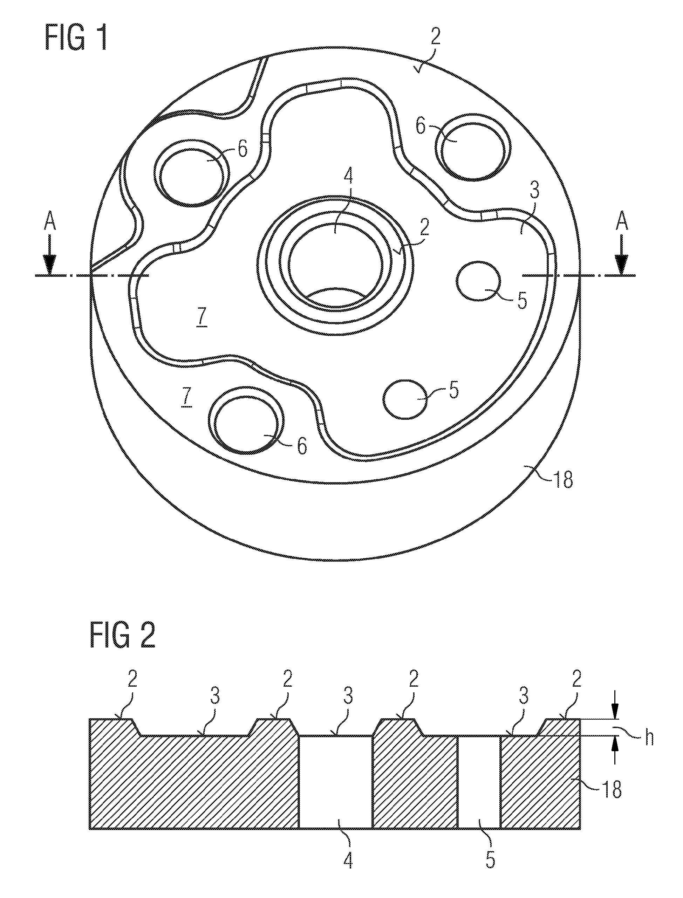

Figur 1 zeigt als Ausführungsbeispiel der Erfindung eine Zwischenplatte 18, die mit dem ECM-Prozess hergestellt wurde. Die Zwischenplatte 18 ist eine von mehreren Baugruppen, die in einem Kraftstoffinjektor verwendet werden, wie später noch näher erläutert wird.

Die Zwischenplatte 18 wird zunächst beispielsweise aus einen Rundmaterial durch Drehen geformt. Anschließend werden die zentrale Bohrung 4 und die weiteren Bohrungen 5,6 eingebracht und -falls erforderlich - gehärtet. An dieser vorgefertigten Zwischenplatte 18 kann nun an einer Stirnseite 7 eine als Dichtfläche 2 ausgebildete erhabene Kontur ausgebildet werden. Die erhabene Dichtfläche 2 wird durch Materialabtragung an benachbarten Teilflächen 3 mit Hilfe eines ECM-Prozesses (Elektro-Chemical Mashining) gefertigt. Wie Figur 1 weiter entnehmbar ist, ist die Dichtfläche 2 mit einer unregelmäßigen Geometrie versehen. Sie umschließt in diesem Ausführungsbeispiel drei Bohrungen 6, die als Hochdruckbohrungen ausgeführt sind. Die Dichtfläche 2 soll verhindern, dass nach dem Zusammenfügen mit einer zweiten Baugruppe an der Dichtfläche 2 Kraftstoff austreten kann, der mit einen Kraftstoffdruck von bis zu 2000 bar in den Bohrungen 6 fließen kann. Die Abdichtung wird durch Zusammenpressen mit der zweiten Baugruppe erreicht, deren Stirnfläche entweder eben oder mit einer spiegelbildlichen Kontur ausgebildet ist. Der Konzeption der Dichtfläche 2 liegt die Überlegung zu Grunde, die Dichtfläche 2 möglichst schmal und mit geringer Fläche auszuführen, um mit einer begrenzten Anpresskraft eine möglichst große Flächenpressung an den sich berührenden Teilen der beiden Baugruppen zu erreichen.

Wie Figur 1 weiter entnehmbar ist, ist des weiteren an der Zwischenplatte 18 eine zentrale Bohrung 4 angeordnet, die ebenfalls von einer Dichtfläche 2 umgeben ist. Bei zwei weiteren Bohrungen 5, die in der benachbarten Teilfläche (zurückgesetzte Fläche) 3 angeordnet sind, sind dagegen keine Dichtflächen 2 vorgesehen. An diesem einfachen Beispiel ist in vorteilhafter Weise erkennbar, dass mit dem ECM-Prozess beliebig geformte Dichtflächen 2 gebildet und angeordnet sein können.

In alternativer Ausgestaltung der Erfindung ist vorgesehen, auch die rückseitige Stirnfläche der Zwischenplatte 18 in ähnlicher Weise mit wenigstens einer Dichtfläche 2 auszubilden.

Figur 2 zeigt ausschnittsweise einen Längsschnitt durch die in Figur 1 dargestellte Zwischenplatte 18 entlang der Linie A-A. Besonders deutlich ist erkennbar, dass die Dichtflächen 2 gegenüber der zurückgesetzten Teilfläche 3 erhaben ausgebildet sind. Mit den Bezeichnungen 4 und 5 sind die beiden angeschnittenen Bohrungen gekennzeichnet. Die Differenzhöhe h zwischen den beiden Flächen 2,3 wird vorzugsweise in Abhängigkeit von der Funktion gewählt. Um die Arbeitszeit für den Materialabtrag möglichst gering zu halten, ist vorgesehen, die Differenzhöhe h beispielsweise im Bereich 0 bis 100µm auszubilden. Wie Figur 2 weiter entnehmbar ist, entstehen an den Abtragungskanten keine Sekundärgrade, sondern - entsprechend der Form der Kathode - leichte Abrundungen und schräge Flanken, so dass keine weiteren Nachbearbeitungen erforderlich werden.

Die Erfindung ist nicht auf das Ausführungsbeispiel beschränkt. Es ist vorgesehen, den ECM-Prozess auch für Hochdruckdichtflächen zu verwenden, die beispielsweise an Hochdruckpumpen benötigt werden.

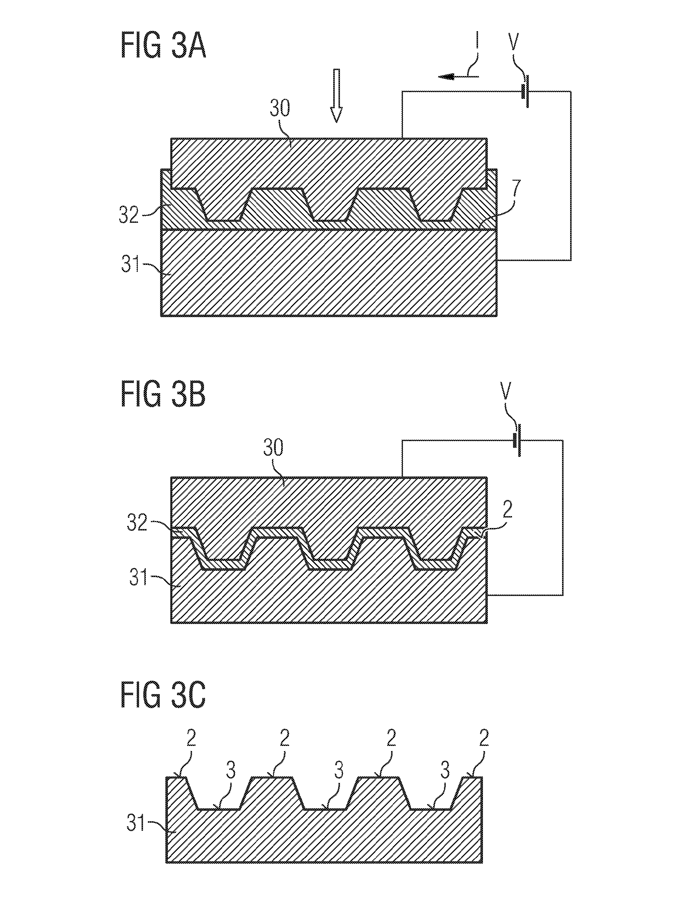

Anhand der Figuren 3a,b,c wird das Verfahren zum Materialabtrag mit Hilfe des ECM-Prozesses näher erläutert. In Figur 3a ist ausschnittsweise eine geformte Elektrode 30 mit drei nach unten gerichteten Kathoden dargestellt. Die Kathoden 30 sind mit geringem Abstand auf das zu bearbeitende Werkstück 31, beispielsweise der Stirnfläche 7 der Zwischenplatte 18 gerichtet. Sie sind so geformt, dass mit ihnen die gewünschte Oberflächenstruktur auf der Stirnfläche 7 erzeugt werden kann. Das Abbild der Elektrode 30 wird somit spiegelbildlich an der Oberfläche des Werkstücks 31 abgebildet. Zwischen der Elektrode 30 und dem Werkstück 31 wird beispielsweise durch Tauchen oder Einspritzen ein geeigneter Elektrolyt 32, zum Beispiel Natriumchlorid (NaCl) oder ähnliches, eingebracht. Des weiteren wird zwischen der Elektrode 30 und dem Werkstück 31 eine Gleichspannung V so geschaltet, dass das Werkstück 31 als Material abgebende Anode wirkt. Das abgetragene Material des Werkstücks 31 wird über den Elektrolyten 32 ausgeschwemmt. Mit Hilfe des im Stromkreis fließenden Arbeitsstromes I, der Formgebung und des Abstandes der Kathoden 30 sowie dem Elektrolytfluss kann die Abtragungsgeschwindigkeit gesteuert werden. So kann beispielsweise bei einem hohen Arbeitsstrom ein schneller Materialabtrag erreicht werden, um insbesondere erhabene Strukturen zu erzeugen. Um eine Oberfläche durch Polieren besonders eben und glatt herzustellen, kann ein geringer Materialabtrag beispielsweise durch einen geringeren Arbeitsstrom erreicht werden. Durch Drehen und/oder Bewegen der Kathode 30 oder des Werkstücks 31 kann das Ergebnis weiter verbessert und beliebige Konturen erzeugt werden.

Als besonders erfindungswesentlich wird angesehen, dass beispielsweise durch einfaches Umschalten der Bearbeitungsparameter, Mehrfachimpulse usw. mehrere Arbeitsschritte praktisch gleichzeitig durchgeführt werden können. Ein zeitaufwändiges Umrüsten des Werkzeugs 30 ist nicht erforderlich.

Figur 3b zeigt die in Figur 3a gezeigt Anordnung den ECM-Prozess mit der Materialabtragung nach einiger Zeit. Hier ist erkennbar, wie die Anoden 30 das Metall aus dem Werkstück 31 abgetragen haben. Die Konturen der erhabenen Teile, beispielsweise die Dichtflächen 2 haben sich an die Konturen der Kathoden 30 angepasst. Je nach Ausbildung der Kathoden 30 und/oder deren Abstand zum Werkstück 31 kann die Oberfläche nahezu beliebig, beispielsweise auch sphärisch oder konkav ausgebildet werden.

Figur 3c zeigt das fertige Werkstück 31 mit erhabenen Dichtflächen 2 und zurückgesetzten Teilflächen 3. Ein solches Werkstück 31 kann eine Baugruppe eines Kraftstoffinjektors sein, der in einem Hochdruckeinspritzsystem wie einem Common Rail Einspritzsystem oder dergleichen verwendet werden kann.

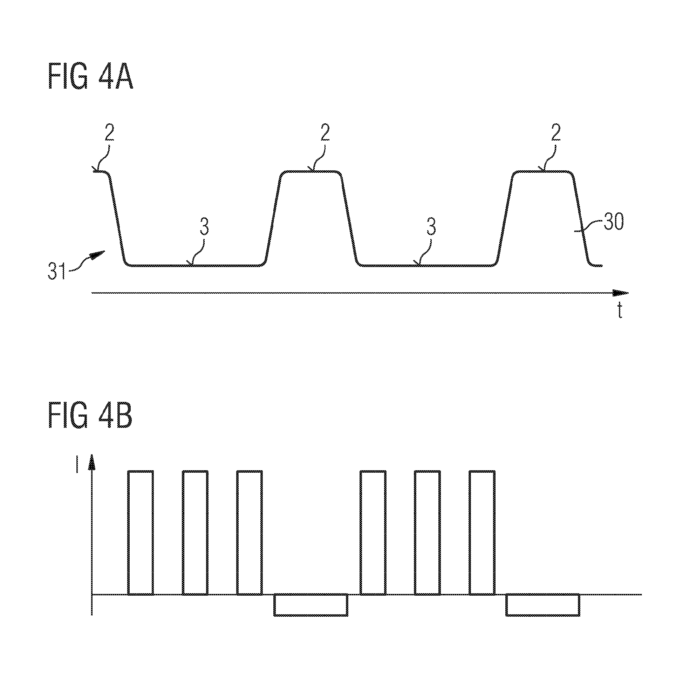

Die Figuren 4a und 4b zeigen ein weiteres Ausführungsbeispiel der Erfindung. In Figur 4a ist ausschnittsweise ein Werkstück 30 dargestellt, in das zwei zurückgesetzte Flächen 3 und drei erhaben ausgebildete Dichtflächen 2 geformt wurden. Die Ausbildung der zurückgesetzten Flächen 3 wurde dadurch erreicht, dass die Kathode während der Materialabtragung bewegt wurde.

In dem darunter liegenden Diagramm der Figur 4b ist ein entsprechendes Stromdiagramm aufgetragen. Wie der Figur 4b weiter entnehmbar ist, wurden für den Materialabtrag der zurückgesetzten Flächen 3 zunächst drei Gruppen von hohen Stromimpulsen I geschaltet. Danach wird die Kathode 30 etwas abgehoben und die Elektrode 30 mit kleineren Gegenimpulsen mit umgekehrter Polung gereinigt. Anschließend wird nach einer Elektrolytspülung die Kathode 30 wieder an das Werkstück 31 herangeführt und drei weitere Gruppen mit hohen Stromimpulsen geschaltet. Danach erfolgt wieder ein Reinigungszyklus usw. Durch Variation der einzelnen Betriebsparameter wie Stromstärke, Pulsanordnung, Pulsdauer usw. können praktisch beliebige Strukturen gebildet werden. 1

Zum Polieren der Dichtflächen 2 werden geänderte kleinere Stromimpulse I verwendet. Die Pulsfolge mit den zwischengeschalteten Reinigungspulsen kann in Abhängigkeit von den Anforderungen beliebig variiert werden. Durch entsprechende Gestaltung und Umschaltung des Arbeitstromes I können somit mehrere Arbeitsschritte durchgeführt werden, ohne dass ein zeitaufwändiges Umrüsten der ECM-Maschine erforderlich ist. Auf diese Weise kann der Fertigungsprozess nicht nur automatisiert werden, sondern es können insbesondere bei der Serienfertigung die Baugruppen 30 sehr viel kostengünstiger hergestellt werden.

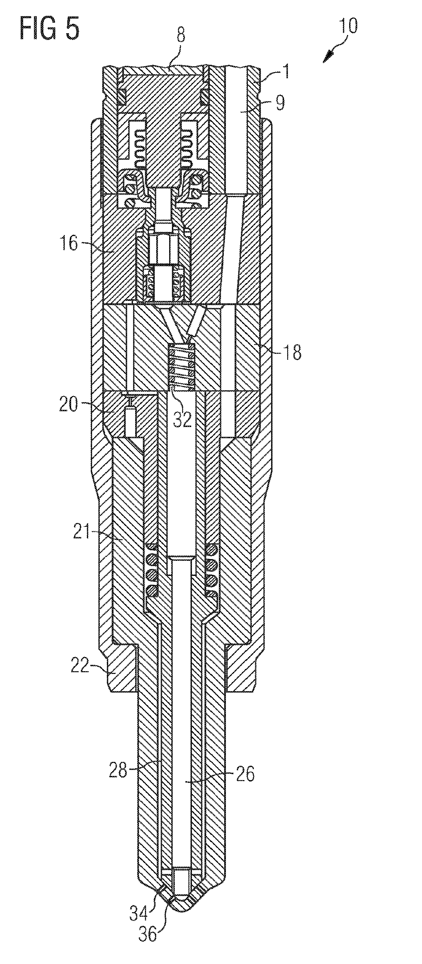

Figur 5 zeigt einen Schnitt durch einen Kraftstoffinjektor 10, der aus mehreren, übereinander angeordneten Baugruppen zusammenbesetzt ist.

Unterhalb eines Injektorgehäuses 1 sind eine Ventileinheit 16, eine Zwischenplatte 18, ein Nadelführungskörper 20 und ein Düsenkörper 21 in axialer Richtung angeordnet. Die einzelnen Baugruppen 1,16,18,20,21 werden von einer Düsenspannmutter 22 zusammengepresst, die von unten über den Düsenkörper 21 geschoben und mit dem Injektorgehäuse 1 verschraubt wird.

In dem Injektorgehäuse 1 ist vorzugsweise ein piezoelektrischer Aktor 8 angeordnet, durch dessen Längenänderungen das Servoventil 16 betätigt werden kann. Über eine hydraulische Kopplung werden schließlich zwei im Düsenkörper 21 koaxial angeordnete Düsennadeln 26,28 betätigt, die nach Abheben von ihrem Düsensitz entsprechend angeordnete Spritzlöcher 34,36 sukzessive freigeben.

Im oberen Teil des Kraftstoffinjektor 10 ist gemäß Figur 5 auf der rechten Seite eine Hochdruckbohrung 9 erkennbar, über die der unter hohem Druck stehende Kraftstoff, beispielsweise Benzin oder Dieselöl zugeführt wird. Die Bohrung 9 ist durchgehend durch alle Baugruppen 1,16,18,20,21 bis zur Düsenspitze geführt. Innerhalb des Kraftstoffinjektors 10 sind weitere Hochdruckbohrungen und unter Hochdruck stehende Steuerräume usw. vorhanden, die vom Kraftstoff durchflossen werden. Da die Kraftstoff führenden Leitungen durch die einzelnen Baugruppen 1,16,18,20,21 durchführt werden, müssen die Stoßstellen entsprechend hochdruckdicht abgedichtet werden. Aus diesem Grund sind für jeweils zwei sich berührende Stirnseiten zweier benachbarter Baugruppen, insbesondere zwischen dem Injektorgehäuse 1 und dem Servoventil 16, zwischen dem Servoventil 16 und der Zwischenplatte 18, zwischen der Zwischenplatte 18 und dem Nadelführungskörper 20 sowie zwischen dem Nadelführungskörper 20 und dem Düsenkörper 21 entsprechend geformte Dichtflächen ausgebildet. Diese Dichtflächen werden erfindungsgemäß mit dem ECM-Prozess gefertigt.

## Patentansprüche

1. Verfahren zur Bearbeitung einer Dichtfläche (2), insbesondere an einer Baugruppe (1,16,18,20,21) eines Kraftstoffinjektors (10), **dadurch gekennzeichnet, dass** zur Herstellung der wenigstens einen Dichtfläche (2) die Materialabtragung mit einem elektrochemischen Bearbeitungsprozess (ECM-Prozess) durchgeführt wird und dass der ECM-Prozess zum Senken und Polieren eingesetzt wird.

2. Verfahren nach Anspruch 1, **dadurch gekennzeichnet, dass** eine erhabene Dichtfläche (2) durch Materialabtrag an einer benachbarten Teilfläche (3) ausgebildet wird.

3. Verfahren nach Anspruch 1 oder 2, **dadurch gekennzeichnet, dass** die Dichtfläche (2) durch Umschalten wenigstens eines Prozessparameters als Senke vertieft ausgebildet wird.

4. Verfahren nach einem der vorhergehenden Ansprüche, **dadurch gekennzeichnet, dass** die Dichtfläche (2) eben, konkav oder konvex ausgebildet wird.

5. Verfahren nach einem der vorhergehenden Ansprüche, **dadurch gekennzeichnet, dass** zum Polieren der Dichtfläche (2) der ECM-Prozess mit einem geänderten Prozessparameter, beispielsweise einem geringeren Arbeitsstrom, geändertem Abstand und/oder Änderung der Elektrolytspülung verwendet wird.

6. Verfahren nach einem der vorhergehenden Ansprüche, **dadurch gekennzeichnet, dass** zur Ausbildung der Dichtfläche (2) eine wässrige Elektrolytlösung, beispielsweise NaCl verwendet wird und dass zwischen der Dichtfläche (2) als Anode und einer ihr gegenüber angeordneten Kathode eines Werkzeugs (30) eine elektrische Gleichspannung (V) angelegt wird.

7. Verfahren nach einem der vorhergehenden Ansprüche, **dadurch gekennzeichnet, dass** der Elektrolyt direkt auf die abzutragende Fläche der Baugruppe (1,16,18,20,21), insbesondere an einer Stirnseite (7) aufgesprüht wird.

8. Verfahren nach einem der vorhergehenden Ansprüche, **dadurch gekennzeichnet, dass** während der Bearbeitung der Dichtfläche (2) die Kathode und/oder die Dichtfläche (2) bewegt oder gedreht werden.

9. Verfahren nach einem der vorhergehenden Ansprüche, **dadurch gekennzeichnet, dass** zur Steuerung des Materialabtrags die Höhe des Arbeitsstromes, die Einwirkdauer und/oder der Elektrolytfluss vorgegeben wird.

10. Kraftstoffinjektor mit wenigstens zwei Baugruppen (1,16,18,20,21), deren inneren Stirnflächen (7) übereinanderliegend angeordnet und wenigstens teilweise als Dichtflächen (2) hochdruckfest ausgebildet sind, **dadurch gekennzeichnet, dass** die Dichtflächen (2) nach einem Verfahren der vorhergehenden Ansprüche hergestellt sind.
